# EUROPÄISCHE PATENTSCHRIFT

(11) **EP 1 208 746 B1**
(45) Veröffentlichungstag und Bekanntmachung des Hinweises auf die Patenterteilung: **12.11.2003**
(21) Anmeldenummer: 01122841.8
(22) Anmeldetag: 22.09.2001
(51) Int. Cl.: A01K 1/02

(54) **Deck- und Wartestall**
Mating and waiting stable
Etable d'accouplement et d'attente

(30) Priorität: 16.11.2000 DE 10056852
(43) Veröffentlichungstag der Anmeldung: 29.05.2002
(73) Patentinhaber: Liebhart, Elmar, 89854 Dettingen (DE)
(72) Erfinder: Liebhart, Elmar, 89854 Dettingen (DE)
(74) Vertreter: Kiessling, Christian

(56) Entgegenhaltungen:
- WO-A-89/08979
- DE-B- 1 264 136
- GB-A- 411 297
- NL-A- 6 504 326
- US-A- 3 127 871

## Beschreibung

Die Erfindung betrifft eine überdachte Stall-Vorrichtung für Zuchttiere, insbesondere Schweine, mit einem zentralen Personengang und einer Mehrzahl von Kastenständen, in denen jeweils ein Zuchttier unterbringbar ist.

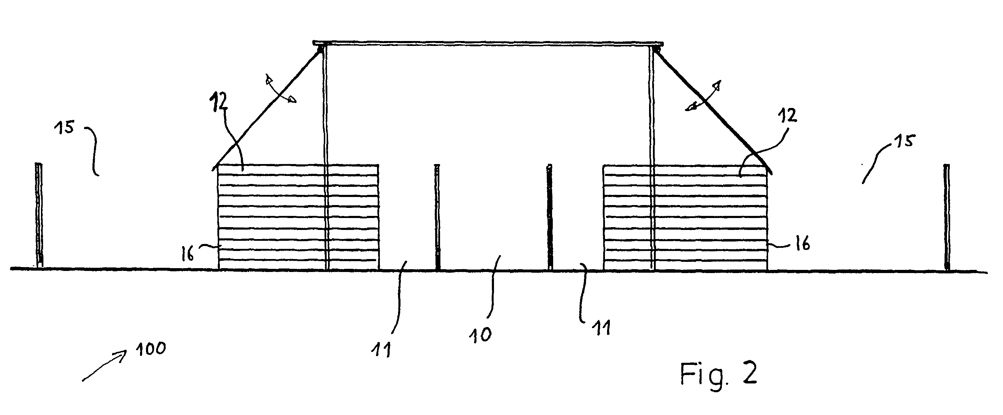

Eine solche Stall-Vorrichtung ist beispielsweise der Abb. 2 des Entwurfs zum KTBL-Arbeitsblatt "Schweinehaltung" zu entnehmen (in: "Bauen auf dem Lande", Heft 2, 1974).

Eine solche Stall- Vorrichtung ist auch aus der DE-B-1 264 136 bekannt.

Stall-Vorrichtungen der eingangs genannten Art werden im Stand der Technik verwendet, um Zuchttiere, insbesondere Schweine für Deck- und Wartungsvorgänge in einem möglichst eng bemessenen überdachten und gegebenenfalls beheizbaren Raumbereich zu halten. Die Zuchttiere sind dabei in einem jeweiligen Kastenstand soweit fixiert, dass ihr Gesundheitszustand umfänglich von dem Personengang aus kontrollierbar ist. Die bekannten Stall-Vorrichtungen weisen jedoch insbesondere den Nachteil auf, dass der überdachte bzw. beheizbare Raumbereich sehr groß und damit teuer in der Herstellung und kostenungünstig im Betrieb ist.

Aufgabe der Erfindung ist es deshalb, eine überdachte Stallvorrichtung für Zuchttiere, insbesondere Schweine, zu schaffen, die einen gegenüber den bekannten Stall-Vorrichtungen verkleinerten überdachten bzw. beheizbaren Raumbereich aufweist, wobei gleichwohl insgesamt die Bewegungsfreiheit erhöht ist.

Für eine Stall-Vorrichtung der eingangs genannten Art wird diese Aufgabe gelöst durch eine Vorrichtung gemäß Anspruch 1.

Bevorzugte Ausführungsformen der Erfindung sind Gegenstand der Unteransprüche.

Bei der erfindungsgemäßen Stall-Vorrichtung wird durch die Merkmalskombination, dass beidseitig des Personengangs jeweils ein Führungsgang zum Führen von Zuchttieren in die jeweiligen Kastenstände vorgesehen ist, wobei im Bereich des Eingangs eines jeweiligen Kastenstandes eine Türeinrichtung vorgesehen ist, die in einem geöffneten Zustand einen Zugang zu dem betreffenden Kastenstand ermöglicht und in geschlossenem Zustand einen Zugang zu dem betreffenden Kastenstand versperrt, wobei die Türeinrichtung in geöffnetem Zustand mit mindestens einer in den Führungsgang hineinragenden Leiteinrichtung zum Führen eines Zuchttieres in den betreffenden Kastenstand zusammenwirkt, erreicht, dass Zuchttiere von einem selbst gewählten Aufenthalt außerhalb der Stall-Vorrichtung, etwa zum Zweck des Fressens oder Defäzierens sich selbst auf eigenen Wunsch hin in einen in einem geschützten und gewärmten Raumbereich befindlichen Kastenstand einbringen können, indem sie den Führungsgang entlang laufen und dort durch Wirkung einer betreffenden Türeinrichtung automatisch in einen nicht besetzten Kastenstand geführt werden, wobei die Kastenstände durch die Führung der Leiteinrichtung der entsprechenden Türeinrichtungen sukzessive nacheinander von einem Zuchttier besetzt werden.

Gemäß einer bevorzugten Ausführungsform der erfindungsgemäßen Vorrichtung ist vorgesehen, dass beidseitig der Mehrzahl von Kastenständen jeweils ein Auslaufbereich vorgesehen ist, wobei in dem dem mit einer Türeinrichtung versehenen Ende gegenüberliegenden Ende eines Kastenstandes eine Öffnung vorgesehen ist, durch die ein Zugang in den Auslaufbereich ermöglicht ist. Die Öffnung enthält dabei vorzugsweise eine Schließeinrichtung, so dass ein Zuchttier bei geschlossener Schließeinrichtung in seinem Kastenstand gefangen und fixiert ist. Bei geöffneter Schließeinrichtung kann das Zuchttier nach eigenem Gutdünken in den Auslaufbereicht hinauslaufen und sich dort frei bewegen, oder es besteht beispielsweise die Möglichkeit, dass das Zuchttier mit seinem Körper innerhalb des Kastenstandes verbleibt und nur seinen Kopf in den Auslaufbereich hinauslegt, um frische Luft atmen zu können.

Der Auslaufbereich ist gemäß einer bevorzugen Ausführungsform der Erfindung nicht überdacht und beheizt, um die Gesamtkosten des erfindungsgemäßen Stalls niedrig zu halten, kann alternativ jedoch mindestens teilweise auch überdacht sein.

Gemäß einer weiteren bevorzugten Ausführungsform der erfindungsgemäßen Vorrichtung ist vorgesehen, dass ein Kastenstand so eng bemessen ist, dass ein Zuchttier sich darin nicht um seine Hochachse wenden kann. Dadurch ist sichergestellt, dass insbesondere die hinteren Partien eines Zuchttieres von einer im Personengang befindlichen Person in Augenschein genommen werden können.

Gemäß einer wichtigen bevorzugten Ausführungsform der erfindungsgemäßen Vorrichtung ist vorgesehen, dass die Türeinrichtung in geöffnetem Zustand mit zwei in den Führungsgang hineinragenden Leiteinrichtungen zum Führen eines Zuchttieres in den betreffenden Kastenstand zusammenwirkt, wobei die Leiteinrichtungen in unterschiedliche Richtungen weisen. Dies hat den Vorteil, dass es ermöglicht ist, Zuchttiere von beiden Seiten des Führungsganges in einen Kastenstand zu leiten. Eine Leiteinrichtung kann dabei mindestens teilweise von der Türeinrichtung gebildet sein oder auch vollständig von der Türeinrichtung gebildet sein.

Gemäß einer weiteren bevorzugten Ausführungsform der erfindungsgemäßen Vorrichtung ist vorgesehen, dass der Personengang eine Breite von ca. 1 m, der Führungsgang eine Breite von ca. 0,5 m und ein Kastenstand eine Tiefe von ca. 2 m aufweist.

Die erfindungsgemäße Stall-Vorrichtung wird im folgenden anhand einer bevorzugten Ausführungsform erläutert, die in den Figuren der Zeichnung dargestellt ist. Darin zeigt:
Fig. 1 eine erste bevorzugte Ausführungsform der erfindungsgemäßen Stall-Vorrichtung in einer Ansicht von oben;
Fig.2 die in Figur 1 dargestellte bevorzugte Ausführungsform der erfindungsgemäßen Stall-Vorrichtung in einer geschnittenen Seitenansicht.

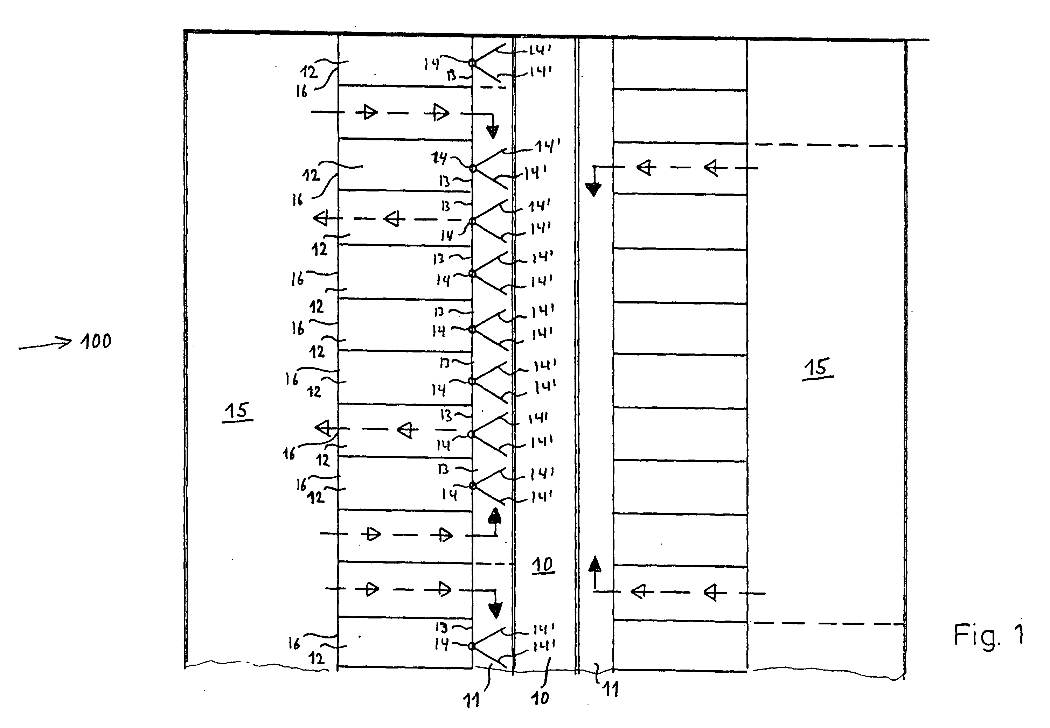

Bei der in den Figuren 1 und 2 dargestellten erfindungsgemäßen überdachten Stall-Vorrichtung 100 für Zuchttiere, insbesondere Schweine, ist beidseitig eines Personengangs 10 jeweils ein Führungsgang 11 zum Führen von Zuchttieren in die jeweiligen Kastenstände 12 vorgesehen, wobei im Bereich eines Eingangs 13 eines jeweiligen Kastenstandes 12 eine Türeinrichtung 14 vorgesehen ist, die in einem geöffneten Zustand einen Zugang zu dem betreffenden Kastenstand 12 ermöglicht und in geschlossenem Zustand einen Zugang zu dem betreffenden Kastenstand 12 versperrt, wobei die Türeinrichtung 14 in geöffnetem Zustand mit zwei in den Führungsgang hineinragenden Leiteinrichtungen 14' zum Führen eines Zuchttieres in den betreffenden Kastenstand 12 zusammenwirkt. Bei der in Figur 1 dargestellten Ausführungsform ist zum Zweck einer übersichtlichen Darstellung auf der rechten Seite auf das Einfügen von Bezugszeichen verzichtet worden. Die entsprechenden Bauteile sind jedoch spiegelbildlich symmetrisch zu den auf der linken Seite dargestellten Bauteilen ausgebildet.
Bei der erfindungsgemäßen Stall-Vorrichtung ist ein Kastenstand 12 so eng bemessen ist, dass ein Zuchttier sich darin nicht um seine Hochachse wenden kann.

Beidseitig der Mehrzahl von Kastenständen 12 ist jeweils ein Auslaufbereich 15 vorgesehen, wobei in dem dem mit einer Türeinrichtung 14 versehenen Ende gegenüberliegenden Ende eines Kastenstandes 12 eine Öffnung 16 vorgesehen ist, durch die ein Zugang in den Auslaufbereich 15 ermöglicht ist. Die Öffnung 16 enthält eine Schließeinrichtung, die den Zugang zu dem nicht überdachten Auslaufbereich 15 abriegelt oder freigibt.

Die Türeinrichtung 14 wirkt in geöffnetem Zustand mit zwei in den Führungsgang 11 hineinragenden Leiteinrichtungen 14' zum Führen eines Zuchttieres in den betreffenden Kastenstand 12 zusammen, wobei die Leiteinrichtungen 14' teilweise von der Türeinrichtung 14 gebildet sind. Die erfindungsgemäße Stall-Vorrichtung 100 sind zwei Leiteinrichtungen 14' vorgesehen, um sicherzustellen, dass Zuchttiere den in Figur 1 dargestellten Pfeilen folgend von zwei Seiten in einen Kastenstand 12 gelangen können.

Bei der erfindungsgemäßen Stall-Vorrichtung 100 weist der Personengang 10 eine Breite von ca. 1 m, der Führungsgang 11 eine Breite von ca. 0,5 m und ein Kastenstand 12 eine Breite von ca. 2 m auf.

## Patentansprüche

1. Überdachte Stall-Vorrichtung für Zuchttiere, insbesondere Schweine, mit einem zentralen Personengang (10) und einer Mehrzahl von Kastenständen (12), in denen jeweils ein Zuchttier unterbringbar ist, wobei beidseitig des Personengangs (10) jeweils ein Führungsgang (11) zum Führen von Zuchttieren in die jeweiligen Kastenstände (12) vorgesehen ist, wobei im Bereich eines Eingangs (13) eines jeweiligen Kastenstandes (12) eine Türeinrichtung (14) vorgesehen ist, die in einem geöffneten Zustand einen Zugang zu dem betreffenden Kastenstand (12) ermöglicht und in geschlossenem Zustand einen Zugang zu dem betreffenden Kastenstand (12) versperrt, wobei die Türeinrichtung (14) in geöffnetem Zustand mit mindestens einer in den Führungsgang (11) hineinragenden Leiteinrichtung (14') zum Führen eines Zuchttieres in den betreffenden Kastenstand (12) zusammenwirkt, **dadurch gekennzeichnet, dass** beidseitig der Mehrzahl von Kastenständen (12) jeweils ein Auslaufbereich (15) vorgesehen ist, wobei in dem dem mit einer Türeinrichtung (14) versehenen Ende gegenüberliegenden Ende eines Kastenstandes (12) eine Öffnung (16) vorgesehen ist, durch die ein Zugang in den Auslaufbereich (15) ermöglicht ist.

2. Vorrichtung nach Anspruch 1, **dadurch gekennzeichnet, dass** die Öffnung (16) eine Schließeinrichtung enthält.

3. Vorrichtung nach einem der Ansprüche 1 oder 2, **dadurch gekennzeichnet, dass** der Auslaufbereich (15) nicht überdacht ist.

4. Vorrichtung nach einem der vorhergehenden Ansprüche, **dadurch gekennzeichnet, dass** ein Kastenstand (12) so eng bemessen ist, dass ein Zuchttier sich darin nicht um seine Hochachse wenden kann.

5. Vorrichtung nach einem der vorhergehenden Ansprüche, **dadurch gekennzeichnet, dass** die Türeinrichtung (14) in geöffnetem Zustand mit zwei in den Führungsgang (11) hineinragenden Leiteinrichtungen (14') zum Führen eines Zuchttieres in den betreffenden Kastenstand (12) zusammenwirkt.

6. Vorrichtung nach einem der Ansprüche 1 bis 5, **dadurch gekennzeichnet, dass** die Leiteinrichtung (14') mindestens teilweise von der Türeinrichtung (14) gebildet ist.

7. Vorrichtung nach einem der Ansprüche 1 bis 5, **dadurch gekennzeichnet, dass** die Leiteinrichtung (14') vollständig von der Türeinrichtung (14) gebildet ist.

8. Vorrichtung nach einem der vorhergehenden Ansprüche, **dadurch gekennzeichnet, dass** der Personengang (10) eine Breite von ca. 1 m, der Führungsgang (11) eine Breite von ca. 0,5 m und ein Kastenstand (12) eine Tiefe von ca. 2 m aufweist.

## Claims

1. A covered pen for accommodating breeding stock, particularly breeding swine, having a central aisle (10) and a plurality of boxes (12), in which one breeding animal can be accommodated in each box, wherein on each side of the aisle (10) there is provided a guideway (11) for guiding the animals into the respective boxes (12), a door contrivance (14) being provided near the entrance (13) to a respective box (12), which door contrivance (14), when in its open position, allows access to the relevant box (12) and, when in its closed position, bars access to the relevant box (12), and said door contrivance (14), when in its open position, cooperates with at least one guide (14') projecting into the guideway (11) for the purpose of guiding an animal into the relevant box (12), **characterized in that** on each side of the plurality of boxes (12) there is provided an exercise area (15), and at that end of a box (12) which is remote from the end provided with a door contrivance (14) there is provided an opening (16) which allows access to said exercise area (15).

2. A contrivance as defined in claim 1, **characterized in that** said opening (16) comprises a closing device.

3. A contrivance as defined in claim 1 or claim 2, **characterized in that** said exercise area is uncovered.

4. A contrivance as defined in any one of the previous claims, **characterized in that** a box (12) has such confined dimensions that a breeding animal cannot turn around about its own vertical axis.

5. A contrivance as defined in any one of the previous claims, **characterized in that** said door contrivance (14), when in its open position, cooperates with two guides (14') projecting into the guideway (11) for the purpose of guiding an animal into the relevant box (12).

6. A contrivance as defined in any one of claims 1 to 5, **characterized in that** said guide (14') is at least partially formed by the door contrivance (14).

7. A contrivance as defined in any one of claims 1 to 5, **characterized in that** said guide (14') is completely formed by the door contrivance (14).

8. A contrivance as defined in any one of the previous claims, **characterized in that** the aisle (10) has a width of *ca* 1 m, the guideway (11) a width of *ca* 0.5 m, and a box (12) a depth of *ca* 2 m.

## Revendications

1. Installation d'étable couverte pour animaux reproducteurs, en particulier pour des cochons, présentant un couloir à personnes central (10) et une pluralité de stalles (12) adaptées à recevoir chacune un seul animal reproducteur, deux couloirs directeurs (11) pour diriger des animaux reproducteurs vers leurs stalles (12) respectives étant prévus respectivement aux deux côtés du couloir à personnes (10), un dispositif de porte (14) étant prévu dans la zone d'une entrée (13) d'une stalle (12) respective, ce dispositif permettant, en état ouvert, l'accès a la stalle (12) en question et bloquant, en état fermé, l'accès a la stalle (12) en question, le dispositif de porte (14) coopérant, en état ouvert, avec au moins un dispositif directeur (14') destiné à diriger un animal reproducteur dans la stalle (12) en question et faisant saillie dans le couloir directeur (11),
**caractérisée en ce que** à l'extérieur de la pluralité de stalles (12) sont prévus deux zones encloses (15) respectives, une ouverture (16) étant prévue dans l'extrémité opposée à l'extrémité munie d'un dispositif de porte (14) d'une stalle (12), permettant l'accès à une zone enclose (15).

2. Installation selon la revendication 1,
**caractérisée en ce que** l'ouverture (16) comporte un dispositif de fermeture.

3. Installation selon l'une des revendications 1 ou 2,
**caractérisée en ce que** la zone enclose (15) n'est pas couverte.

4. Installation selon l'une des revendications précédentes, **caractérisée en ce que** une stalle (12) est prévue étroite en largeur de façon à ne pas permettre à l'animal reproducteur de se tourner autour de son axe normal.

5. Installation selon l'une des revendications précédentes, **caractérisée en ce que** le dispositif de porte (14) coopère, en état ouvert, avec deux dispositifs directeurs (14') destinés à diriger un animal reproducteur dans la stalle (12) respective et faisant saillie dans le couloir directeur (11).

6. Installation selon l'une des revendications 1 à 5, **caractérisée en ce que** le dispositif directeur (14') est constitué au moins partiellement par le dispositif de porte (14).

7. Installation selon l'une des revendications 1 à 5, **caractérisée en ce que** le dispositif directeur (14') est constitué entièrement par le dispositif de porte (14).

8. Installation selon l'une des revendications précédentes, **caractérisée en ce que** le couloir à personnes (10) présente une largeur de 1 m environ, que le couloir directeur (11) présente une largeur de 0,5 m environ et qu'une stalle (12) présente une profondeur de 2 m environ.
